# EUROPEAN PATENT SPECIFICATION

(11) **EP 4 500 742 B1**
(45) Date of publication and mention of the grant of the patent: **05.11.2025**
(21) Application number: 23715025.5
(22) Date of filing: 24.03.2023
(51) Int. Cl.: H04J 14/02, F03D 17/00, F03D 7/04

(54) **WIND TURBINE WITH CONTROL NETWORK AND MONITORING NETWORK**
WINDENERGIEANLAGE MIT STEUERUNGSNETZWERK UND ÜBERWACHUNGSNETZWERK
ÉOLIENNE AVEC RÉSEAU DE COMMANDE ET RÉSEAU DE SURVEILLANCE

(30) Priority: 28.03.2022 DK PA202270144
(43) Date of publication of application: 05.02.2025
(73) Proprietor: VESTAS WIND SYSTEMS A/S, 8200 Aarhus N (DK)
(72) Inventor: GROVE, Peter Delgado, 8200 Aarhus N (DK); KNUDSEN, Henrik Althof, 8200 Aarhus N (DK)
(74) Representative: Vestas Patents Department
(86) International application number: PCT/DK2023/050053
(87) International publication number: WO 2023/186229

(56) References cited:
- JP-A- 2011 027 050
- US-B1- 10 378 884
- US-B2- 9 810 556

## Description

### FIELD OF THE INVENTION

The present invention relates to a wind turbine comprising a control network and a monitoring network. The invention also relates to a method of handling communication signals in networks of a wind turbine.

### BACKGROUND OF THE INVENTION

A wind turbine may utilize optical communication systems for various purposes, typically in the form of communication of control signals and communication of monitoring signals. Such signals may be handled by dedicated communication networks. Communication between control and monitoring networks of a wind turbine should ideally be prevented in order to comply with cyber-security standards.

US9810556 B2 discloses a sensor apparatus that comprises an interrogator comprising a light source and a fiber Bragg grating (FBG) arrangement with a plurality of FBG sensors on an optical fiber. JP2011027050 A2 discloses a wind turbine using light signals as control signals. A signal transmission passage for transmitting light signals uses an optical fiber.

### SUMMARY OF THE INVENTION

A first aspect of the invention provides a wind turbine comprising: a nacelle; a rotor rotationally mounted to the nacelle, the rotor comprising a hub, and blades extending from the hub; a control network comprising control-network nodes connected by a first network, the control-network nodes comprising one or more first control-network nodes in the rotor and one or more second control-network nodes in the nacelle; a monitoring network comprising monitoring-network nodes connected by a second network, the monitoring-network nodes comprising one or more first monitoring-network nodes in the rotor and one or more second monitoring-network nodes in the nacelle; an optical fibre which is shared by the first and second networks and extends between the nacelle and the rotor; a first wavelength division multiplexer/demultiplexer in the rotor; and a second wavelength division multiplexer/demultiplexer in the nacelle, wherein: the first wavelength division multiplexer/demultiplexer is configured to receive nacelle-bound light and multiplex the nacelle-bound light onto the optical fibre; the first wavelength division multiplexer/demultiplexer is configured to demultiplex rotor-bound light from the optical fibre and route it to either the control network or the monitoring network based on a wavelength of the rotor-bound light; the second wavelength division multiplexer/demultiplexer is configured to demultiplex the nacelle-bound light from the optical fibre and route it to either the control network or the monitoring network based on a wavelength of the nacelle-bound light; and the second wavelength division multiplexer/demultiplexer is configured to multiplex the rotor-bound light onto the optical fibre.

Optionally at least one of the first monitoring-network nodes and at least one of the second monitoring-network nodes comprises a monitoring element configured to monitor the wind turbine and generate monitoring data.

Optionally the second network is configured to receive the monitoring data and communicate the monitoring data to a substation remote from the wind turbine.

Optionally the second network is configured to communicate monitoring network data to the monitoring-network nodes.

Optionally the monitoring network data comprises configuration data or command data.

Optionally at least one of the first control-network nodes and at least one of the second control-network nodes comprises a control element configured to control the wind turbine based on control data, and the first optical fibre network is configured to communicate the control data to the control elements.

Optionally the first wavelength division multiplexer/demultiplexer and/or the second wavelength division multiplexer/demultiplexer is configured to operate passively.

Optionally the optical fibre is a multi-mode optical fibre.

Optionally the first wavelength division multiplexer/demultiplexer is in the hub.

Optionally the control network and the monitoring network each comprise a respective transmitter in the rotor, and the transmitters in the rotor are configured to generate the nacelle-bound light at respective wavelengths and feed it to the first wavelength division multiplexer/demultiplexer.

Optionally the control network and the monitoring network each comprise a respective transmitter in the nacelle, and the transmitters in the nacelle are configured to generate the rotor-bound light at respective wavelengths and feed it to the second wavelength division multiplexer/demultiplexer.

Optionally the control network and the monitoring network each comprise a respective receiver in the rotor, and the receivers in the rotor are each configured to receive the rotor-bound light at respective wavelengths from the first wavelength division multiplexer/demultiplexer and convert the rotor-bound light into an electrical signal.

Optionally the control network and the monitoring network each comprise a respective receiver in the nacelle, and the receivers in the nacelle are each configured to receive the nacelle-bound light at respective wavelengths from the second wavelength division multiplexer/demultiplexer and convert the nacelle-bound light into an electrical signal.

A further aspect of the invention provides a method of handling communication signals in networks of a wind turbine, the wind turbine comprising: a nacelle; a rotor rotationally mounted to the nacelle, the rotor comprising a hub, and blades extending from the hub; a control network comprising control-network nodes connected by a first network, the control-network nodes comprising one or more first control-network nodes in the rotor and one or more second control-network nodes in the nacelle; a monitoring network comprising monitoring-network nodes connected by a second network, the monitoring-network nodes comprising one or more first monitoring-network nodes in the rotor and one or more second monitoring-network nodes in the nacelle; and an optical fibre which is shared by the first and second networks and extends between the nacelle and the rotor, the method comprising: receiving nacelle-bound light and multiplexing the nacelle-bound light onto the optical fibre; demultiplexing rotor-bound light from the optical fibre and routing it to either the control network or the monitoring network based on a wavelength of the rotor-bound light; demultiplexing the nacelle-bound light from the optical fibre and routing it to either the control network or the monitoring network based on a wavelength of the nacelle-bound light; and multiplexing the rotor-bound light onto the optical fibre.

### BRIEF DESCRIPTION OF THE DRAWINGS

Embodiments of the invention will now be described with reference to the accompanying drawings, in which:
Figure 1 shows a wind turbine
Figure 2 shows a control system of the wind turbine;
Figure 3 shows elements of a monitoring network and a control network of the wind turbine;
Figure 4 shows the monitoring network and control network in more detail; and
Figure 5 shows the optical transceiver/diplexers in detail.

### DETAILED DESCRIPTION OF EMBODIMENT(S)

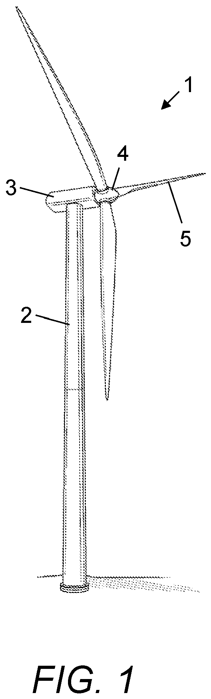

Figure 1 shows a wind turbine 1 comprising a nacelle 3 mounted on a tower 2. A rotor 4, 5 is rotationally mounted to the nacelle 3. The rotor comprises a hub 4, and blades 5 extending from the hub. In this example, the rotor comprises three blades 5. The nacelle 3 can be rotated about a vertical yaw axis to change its yaw angle.

The wind turbine 1 may be included among a collection of other wind turbines belonging to a wind power plant, also referred to as a wind farm or wind park, that serve as a power generating plant connected by transmission lines with a power grid. The power grid generally consists of a network of power stations, transmission circuits, and substations coupled by a network of transmission lines that transmit the power to loads in the form of end users and other customers of electrical utilities.

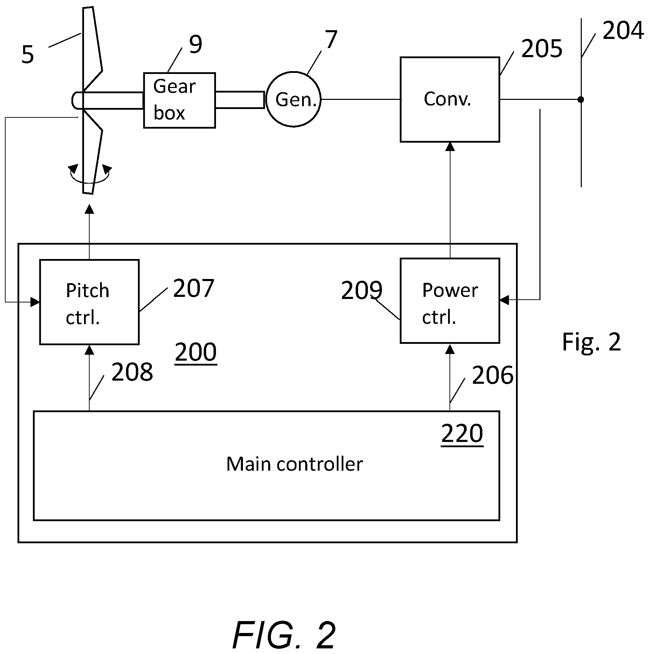

Figure 2 schematically illustrates an embodiment of a control system 200 together with elements of the wind turbine 1. The rotor 4, 5 is mechanically connected to an electrical generator 7 via a gearbox 9. The electrical power generated by the generator 7 is injected into a power grid 204 via an electrical converter 205. The electrical generator 7 and the converter 205 may be based on a full scale converter (FSC) architecture or a doubly fed induction generator (DFIG) architecture, but other types may be used.

The control system 200 comprises a number of elements, including at least one main controller 220 with a processor and a memory, so that the processor is capable of executing computing tasks based on instructions stored in the memory. In general, the main controller 220 ensures that in operation the wind turbine generates a requested power output level. This is obtained by adjusting the pitch angle of the blades and/or the power extraction of the converter 205. To this end, the control system 200 comprises a pitch system including a pitch controller 207 using a pitch reference signal 208, and a power system including a power controller 209 using a power reference signal 206. The rotor blades 5 can be pitched by a pitch mechanism. The rotor comprises an individual pitch system which is capable of individual pitching of the rotor blades 5, and may comprise a common pitch system which adjusts all pitch angles on all rotor blades at the same time. The control system 200, or elements of the control system 200, may be placed in a power plant controller (not shown) so that the turbine may be operated based on externally provided instructions.

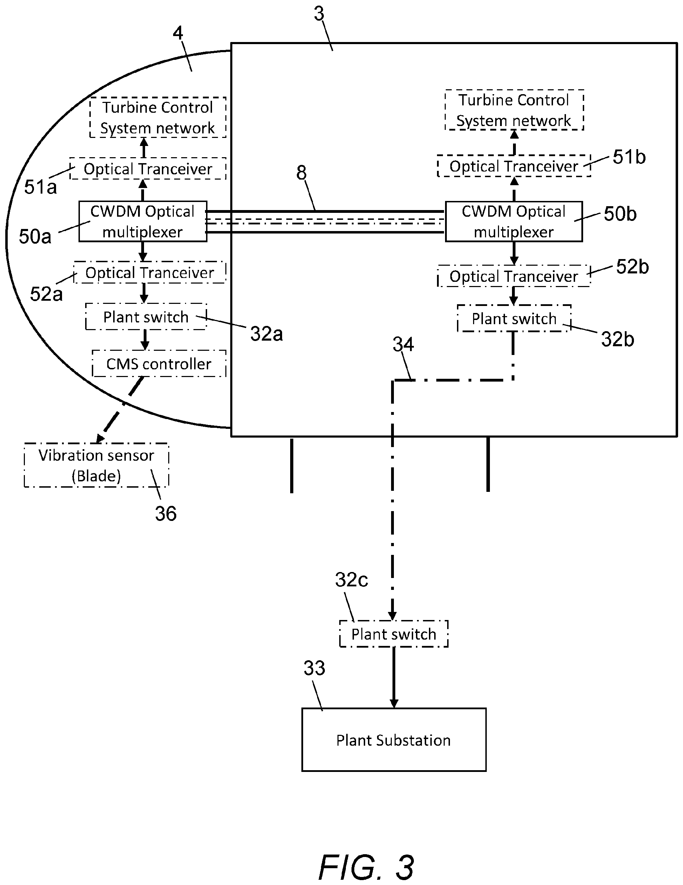

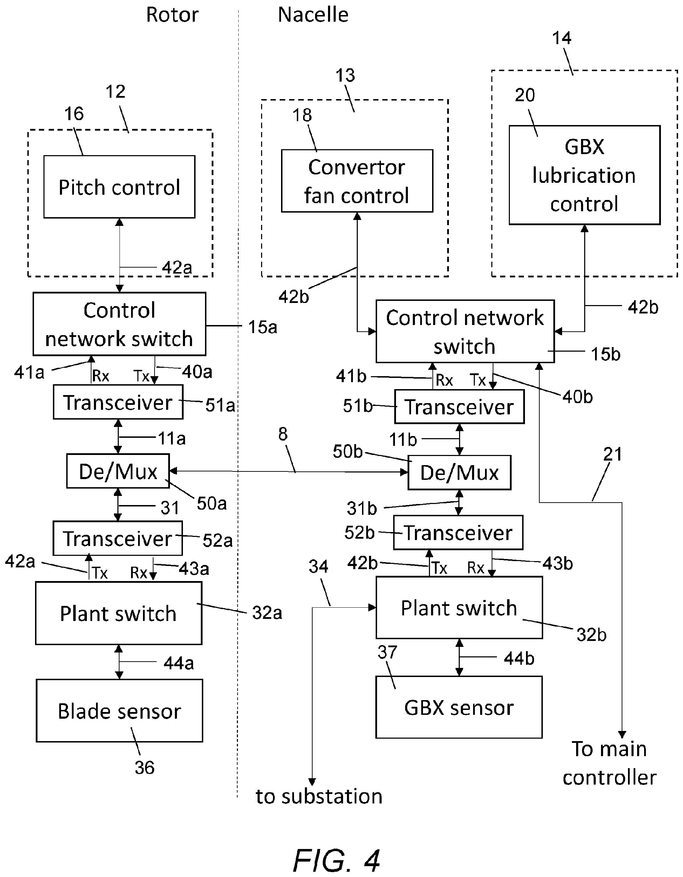

The wind turbine 1 comprises a control network and a monitoring network, which are shown at different levels of detail in Figures 3 and 4. The control network may be configured to control the wind turbine 1; and the monitoring network may be configured to monitor the wind turbine.

An example of the control network is shown in the top part of Figure 4. The control network comprises one or more first control-network nodes 12 in the rotor (for instance, in the hub 4) and one or more second control-network nodes 13 in the nacelle 3. The control-network nodes 12, 13 are connected by a first network. The first network has an optical fibre backbone which comprises an optical fibre 11a in the hub, an optical fibre 11b in the nacelle, and a linking optical fibre 8 which extends between the nacelle 3 and the hub 4. The linking optical fibre 8 may be a multi-mode optical fibre or a single-mode optical fibre. The first network also comprises various electrical communication lines including transmit lines 40a, 40b; receive lines 41a, 41b; and connector lines 42a, 42b.

The control network in the rotor comprise a first optical transceiver/diplexer 51a, a first control network switch 15a, and one or more first control-network nodes 12 connected to the first control network switch 15a. In this example only a single control-network node 12 is shown in the rotor, but in other embodiments further control-network nodes in the rotor may be connected to the first control network switch 15a.

The (or each) first control-network node in the rotor may comprise a distributed control-network node (DCN) 12 with a control element configured to control the wind turbine based on control data from the main controller 220, or any other turbine control system or element. The first network 11a, 11b, 8, 40b, 41a may be configured to communicate this control data to the DCN(s) 12 in the rotor. In this example the control data is received from the main controller 220 via a line 21 into a second control network switch 15b in the nacelle.

In the example of DCN 12, the control element may be a blade pitch control 16 which adjusts the pitch of the blades 5 based on the control data.

One or more of the first control-network nodes in the rotor may transmit as well as receive information. For example one or more of the DCNs 12 may be configured to generate configuration data which is communicated to the main controller 220, or another element of the wind turbine, by the first network 11a, 11b, 8, 40a, 41b.

In this example the first control-network nodes in the rotor are in the hub 4, but alternatively one or more of the first control-network nodes may be in another part of the rotor, such as a blade 5.

The control network in the nacelle comprise a second optical transceiver/diplexer 51b, a second control network switch 15b, and one or more second control-network nodes 13, 14 connected to the second control network switch 15b. In this example two second control-network nodes 13, 14 are shown in the nacelle, but in other embodiments there may be only a single second control-network node in the nacelle, or more than two.

The (or each) second control-network node in the nacelle may comprise a distributed control-network node (DCN) 13, 14 with a control element configured to control the wind turbine based on control data. The optical fibre 11b of the first network in the nacelle may be configured to communicate the control data to the DCN(s) 13, 14 in the nacelle.

In the example of DCN 13, the control element may be a converter fan control 18 which adjusts the power of a converter fan (which cools the converter 205) based on the control data.

In the example of DCN 14, the control element may be a gearbox lubrication control 20 which controls the lubrication of the gearbox 9.

One or more of the second control-network nodes in the nacelle may transmit as well as receive information. For example one or more of the DCNs 13, 14 may be configured to generate configuration data which is communicated to the main controller 220, or another element of the wind turbine, by the second control network switch 15b.

In this example each DCN 12, 13, 14 of the control network may optionally include control elements configured to control the wind turbine, but other control-network nodes may be provided as part of the control network which perform different functions depending on their position. Therefore the term "control-network node" designates a node which is part of the control network, but does not necessarily directly perform a control function.

An example of the monitoring network is shown in the bottom part of Figure 4. The monitoring network comprises one or more first monitoring-network nodes 36 in the rotor 4 and one or more second monitoring-network nodes 37 in the nacelle 3. The monitoring-network nodes of the monitoring network are connected by a second network. The second network has an optical fibre backbone comprising an optical fibre 31a in the hub, an optical fibre 31b in the nacelle, and the linking optical fibre 8 which is shared by the first and second networks. The second network also comprises various electrical communication lines including transmit lines 42a, 42b; receive lines 43a, 43b; and sensor connector lines 44a, 44b.

The monitoring network in the rotor comprises a first optical transceiver/diplexer 52a, a first plant switch 32a, and one or more first monitoring-network nodes 36 connected to the first plant switch 32a. In this example only a single first monitoring-network node 36 is shown in the rotor, but in other embodiments further monitoring-network nodes in the rotor may be connected to the first plant switch 32a.

Each first monitoring-network node in the hub may comprise a monitoring element, such as a sensor, configured to monitor the wind turbine and generate monitoring data. The second network 31a, 31b, 8, 44a, 42a, 43b may be configured to receive the monitoring data from the first monitoring-network node(s) 36 in the rotor and communicate the monitoring data to a plant substation 33 remote from the wind turbine 1. The monitoring data may be output via a second plant switch 32b in the nacelle and a third plant switch 32c at the foot of the tower 2 (the third plant switch 32c and plant substation 33 are shown in Figure 3).

In this example the first monitoring-network node in the rotor may be a blade vibration sensor 36 in one of the blades 5 which measures vibration of one or more of the blades 5.

In this example the first monitoring-network node 36 is located in a blade 5, but alternatively one or more of the first monitoring-network node(s) in the rotor may be in another part of the rotor, such as the hub 4.

One or more of the first monitoring-network nodes in the rotor may receive as well as transmit information. For example the second network may be configured to communicate monitoring network data, such as configuration data or command data, from the main controller 220 to the first monitoring-network node(s) 36 in the rotor.

The monitoring network in the nacelle comprises a second optical transceiver/diplexer 52b, a second plant switch 32b, and one or more second monitoring-network nodes 37 connected to the second plant switch 32b. In this example only a single second monitoring-network node 37 is shown in the nacelle, but in other embodiments further monitoring-network nodes in the nacelle may be connected to the second plant switch 32b.

Each second monitoring-network node 37 in the nacelle may comprise a monitoring element, such as a sensor, configured to monitor the wind turbine and generate monitoring data. The second plant switch 32b may be configured to receive the monitoring data from the first monitoring-network node(s) 37 in the nacelle and communicate the monitoring data to the plant substation 33 via the third plant switch 32c shown in Figure 3.

In this example the second monitoring-network node in the nacelle may be a gearbox vibration sensor 37 which measures vibration of the gearbox 9.

Further monitoring elements in the nacelle may measure the rotation rate of the generator 7, temperature, oil levels and/or power output.

In this example, no control functions are performed by the monitoring network.

The second monitoring-network nodes 37 in the nacelle may receive as well as transmit information. For example the second network may be configured to communicate monitoring network data, such as configuration data or command data, from the main controller 220 to the second monitoring-network node(s) 37 in the nacelle.

In this example each monitoring-network node 36, 37 may optionally include a monitoring element configured to configured to monitor the wind turbine, but other monitoring-network nodes may be provided as part of the monitor network which perform different functions depending on their position. Therefore the term "monitoring-network node" designates a node which is part of the monitor network, but does not necessarily directly perform a monitoring function.

Optionally the monitoring network is functionally separate from the control network, so that communication between the networks is prevented in order to comply with cyber-security standards. This prevents a cyber-attack on the monitoring network, whereby access is gained to the control network via the monitoring network, thus jeopardizing safe control of the wind turbine.

Since the rotor 4, 5 is rotationally mounted to the nacelle 3, the linking optical fibre 8 requires an optical fibre rotating joint. One way of keeping the monitoring network functionally separate from the control network would be for each network to have its own dedicated linking optical fibre. A problem with this alternative solution is that it would require a second linking optical fibre and a multi-channel optical rotating joint.

In the case of Figures 3 and 4, a single linking optical fibre 8 between the nacelle and the rotor is shared by the first and second networks.

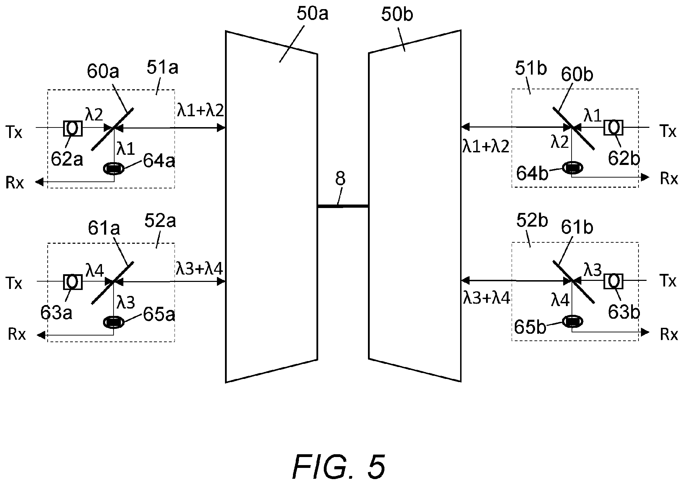

A first wavelength division multiplexer/demultiplexer 50a is provided in the rotor; and a second wavelength division multiplexer/demultiplexer 50b is provided in the nacelle. The multiplexer/demultiplexers 50a, 50b are each connected to the linking optical fibre 8, and optical transceiver/diplexers 51a, 51b, 52a, 52b which are shown in detail in Figure 5.

The control network and the monitoring network each comprise a respective transceiver/diplexer 51a, 52a in the rotor and a respective transceiver/diplexer 51b, 52b in the nacelle.

Each transceiver/diplexer comprises a diplexer 60a, 60b, 61a, 61b; a transmitter 62a, 62b, 63a, 63b (such as a laser) and a receiver 64a, 64b, 65a, 65b (such as an optical receiver).

The transmitters 62a, 62b, 63a, 63b are each configured to generate light at a respective wavelength and feed it into the linking optical fibre 8 via one of the multiplexer/demultiplexers 50a, 50b. This light is either nacelle-bound light (travelling from the rotor to the nacelle) or rotor-bound light (travelling from the nacelle to the rotor).

Each transmitter may convert a respective electrical communication signal into a respective optical communication signal, as explained below.

More specifically: the transmitter 62a of the control network in the rotor may be configured to receive an electrical transmit signal from the control network on transmit line 40a, use the transmit signal to generate nacelle-bound light at a wavelength λ2, and feed it to the first wavelength division multiplexer/demultiplexer 50a via the diplexer 60a.

The transmitter 63a of the monitoring network in the rotor may be configured to receive an electrical transmit signal from the monitoring network on transmit line 42a, use the transmit signal to generate nacelle-bound light at a wavelength λ4, and feed it to the first wavelength division multiplexer/demultiplexer 50a via the diplexer 61a.

The transmitter 62b of the control network in the nacelle may be configured to receive an electrical transmit signal from the control network on transmit line 40b, use the transmit signal to generate rotor-bound light at a wavelength λ1, and feed it to the second wavelength division multiplexer/demultiplexer 50b via the diplexer 60b.

The transmitter 63b of the monitoring network in the nacelle may be configured to receive an electrical transmit signal from the monitoring network on transmit line 42b, use the transmit signal to generate nacelle-bound light at a wavelength λ3, and feed it to the second wavelength division multiplexer/demultiplexer 50b via the diplexer 61b.

The receivers 64a, 64b, 65a, 65b may each be configured to receive light from the linking optical fibre 8 and convert it into an electrical signal.

Each receiver may convert a respective optical communication signal into a respective electrical communication signal, as explained below.

More specifically: the receiver 64a of the control network in the rotor may be configured to receive the rotor-bound light at wavelength λ1 from the first wavelength division multiplexer/demultiplexer 50a and convert it into an electrical signal which it outputs on receive line 41a.

The receiver 65a of the monitoring network in the rotor may be configured to receive the rotor-bound light at wavelength λ3 from the first wavelength division multiplexer/demultiplexer 50a and convert it into an electrical signal which it outputs on receive line 43a.

The receiver 64b of the control network in the nacelle may be configured to receive the nacelle-bound light at wavelength λ2 from the second wavelength division multiplexer/demultiplexer 50b and convert it into an electrical signal which it outputs on receive line 41b.

The receiver 65b of the monitoring network in the nacelle may be configured to receive the nacelle-bound light at wavelength λ4 from the second wavelength division multiplexer/demultiplexer 50b and convert it into an electrical signal which it outputs on receive line 43b.

The first wavelength division multiplexer/demultiplexer 50a may be configured to receive the nacelle-bound light from the control and monitoring networks in the rotor and multiplex the nacelle-bound light onto the linking optical fibre 8. As explained above, nacelle-bound light from the control network is at a wavelength λ2 and nacelle-bound light from the monitoring network is at a wavelength λ4.

The second wavelength division multiplexer/demultiplexer 50b may be configured to receive rotor-bound light from the control and monitoring networks in the nacelle and multiplex the rotor-bound light onto the linking optical fibre 8. As explained above, rotor-bound light from the control network is at a wavelength λ1 and rotor-bound light from the monitoring network is at a wavelength λ3.

The first wavelength division multiplexer/demultiplexer 50a is also configured to demultiplex the rotor-bound light from the linking optical fibre 8 and route it to either the control network or the monitoring network based on a wavelength of the rotor-bound light from the linking optical fibre 8. Rotor-bound light at the wavelength λ1 is routed to the control network in the rotor via the transceiver/diplexer 51a and rotor-bound light at the wavelength λ3 is routed to the monitoring network in the rotor via the transceiver/diplexer 52a.

The second wavelength division multiplexer/demultiplexer 50b is also configured to demultiplex the nacelle-bound light from the linking optical fibre 8 and route it to either the control network or the monitoring network based on a wavelength of the nacelle-bound light from the linking optical fibre 8. Nacelle-bound light at the wavelength λ2 is routed to the control network in the nacelle via the transceiver/diplexer 51b and nacelle-bound light at the wavelength λ4 is routed to the monitoring network in the nacelle via the transceiver/diplexer 52b.

Each diplexer 60a, 60b, 61a, 61b may comprise a passive element such as an angled filtering mirror which reflects light at one wavelength but is transparent at another wavelength. Thus, for example, the diplexer 60a may reflect the rotor-bound light at wavelength λ1 but be transparent to the nacelle-bound light at wavelength λ2.

Optionally each wavelength division multiplexer/demultiplexer 50a, 50b may use a similar passive element, such as an angled filtering mirror, to perform its multiplexing and/or demultiplexing function.

The use of passive elements, such as angled filtering mirrors, is advantageous and enabled by the wavelength-division-multiplexing aspects of the design.

Although the invention has been described above with reference to one or more preferred embodiments, it will be appreciated that various changes or modifications may be made without departing from the scope of the invention as defined in the appended claims.

## Claims

1. A wind turbine (1) comprising:
a nacelle (3);
a rotor (4, 5) rotationally mounted to the nacelle, the rotor comprising a hub (4), and blades (5) extending from the hub;
a control network comprising control-network nodes (12, 13) connected by a first network, the control-network nodes comprising one or more first control-network nodes in the rotor (12) and one or more second control-network nodes in the nacelle (13);
a monitoring network comprising monitoring-network nodes (36, 37) connected by a second network, the monitoring-network nodes comprising one or more first monitoring-network nodes in the rotor (36) and one or more second monitoring-network nodes in the nacelle (37);
an optical fibre (8) which is shared by the first and second networks and extends between the nacelle and the rotor;
a first wavelength division multiplexer/demultiplexer (50a) in the rotor; and
a second wavelength division multiplexer/demultiplexer (50b) in the nacelle, wherein:
the first wavelength division multiplexer/demultiplexer is configured to receive nacelle-bound light and multiplex the nacelle-bound light onto the optical fibre;
the second wavelength division multiplexer/demultiplexer is configured to demultiplex the nacelle-bound light from the optical fibre; and
the second wavelength division multiplexer/demultiplexer is configured to multiplex the rotor-bound light onto the optical fibre;
**characterized in that**:
the first wavelength division multiplexer/demultiplexer is configured to demultiplex rotor-bound light from the optical fibre and route it to either the control network or the monitoring network based on a wavelength of the rotor-bound light; and
the second wavelength division multiplexer/demultiplexer is configured to route nacelle-bound light to either the control network or the monitoring network based on a wavelength of the nacelle-bound light.

2. A wind turbine according to claim 1, wherein at least one of the first monitoring-network nodes (36) and at least one of the second monitoring-network nodes (37) comprises a monitoring element configured to monitor the wind turbine and generate monitoring data.

3. A wind turbine according to claim 2, wherein the second network is configured to receive the monitoring data and communicate the monitoring data to a substation (33) remote from the wind turbine.

4. A wind turbine according to any preceding claim, wherein the second network is configured to communicate monitoring network data to the monitoring-network nodes (36, 37).

5. A wind turbine according to claim 4, wherein the monitoring network data comprises configuration data or command data.

6. A wind turbine according to any preceding claim, wherein at least one of the first control-network nodes (12) and at least one of the second control-network nodes (13) comprises a control element configured to control the wind turbine based on control data, and the first optical fibre network is configured to communicate the control data to the control elements.

7. A wind turbine according to any preceding claim, wherein the first wavelength division multiplexer/demultiplexer (50a) and/or the second wavelength division multiplexer/demultiplexer (50b) is configured to operate passively.

8. A wind turbine according to any preceding claim, wherein the optical fibre is a multi-mode optical fibre.

9. A wind turbine according to any preceding claim, wherein the first wavelength division multiplexer/demultiplexer (50a) is in the hub (4).

10. A wind turbine according to any preceding claim, wherein the control network and the monitoring network each comprise a respective transmitter (62a, 63a) in the rotor, and the transmitters in the rotor are configured to generate the nacelle-bound light at respective wavelengths and feed it to the first wavelength division multiplexer/demultiplexer (50a).

11. A wind turbine according to any preceding claim, wherein the control network and the monitoring network each comprise a respective transmitter in the nacelle (62b, 63b), and the transmitters in the nacelle are configured to generate the rotor-bound light at respective wavelengths and feed it to the second wavelength division multiplexer/demultiplexer (50b).

12. A wind turbine according to any preceding claim, wherein the control network and the monitoring network each comprise a respective receiver (64a, 65b) in the rotor, and the receivers in the rotor are each configured to receive the rotor-bound light at respective wavelengths from the first wavelength division multiplexer/demultiplexer (50a) and convert the rotor-bound light into an electrical signal.

13. A wind turbine according to any preceding claim, wherein the control network and the monitoring network each comprise a respective receiver (64b, 65b) in the nacelle, and the receivers in the nacelle are each configured to receive the nacelle-bound light at respective wavelengths from the second wavelength division multiplexer/demultiplexer (50b) and convert the nacelle-bound light into an electrical signal.

14. A method of handling communication signals in networks of a wind turbine (1), the wind turbine comprising: a nacelle (3); a rotor (4, 5) rotationally mounted to the nacelle, the rotor comprising a hub (4), and blades (5) extending from the hub; a control network comprising control-network nodes (12, 13) connected by a first network, the control-network nodes comprising one or more first control-network nodes in the rotor (12) and one or more second control-network nodes in the nacelle (13); a monitoring network comprising monitoring-network nodes (36, 37) connected by a second network, the monitoring-network nodes comprising one or more first monitoring-network nodes in the rotor (36) and one or more second monitoring-network nodes in the nacelle (37); and an optical fibre (8) which is shared by the first and second networks and extends between the nacelle and the rotor, the method comprising: receiving nacelle-bound light and multiplexing the nacelle-bound light onto the optical fibre; demultiplexing the nacelle-bound light from the optical fibre; and multiplexing the rotor-bound light onto the optical fibre; **characterized in that** the method further comprising: demultiplexing rotor-bound light from the optical fibre and routing it to either the control network or the monitoring network based on a wavelength of the rotor-bound light; and routing nacelle-bound light to either the control network or the monitoring network based on a wavelength of the nacelle-bound light.

## Patentansprüche

1. Windkraftanlage (1), umfassend:
eine Gondel (3);
einen Rotor (4, 5), der drehbar an der Gondel montiert ist, wobei der Rotor eine Nabe (4) und sich von der Nabe erstreckende Blätter (5) umfasst;
ein Steuerungsnetzwerk, das Steuerungsnetzwerkknoten (12, 13) umfasst, die durch ein erstes Netzwerk verbunden sind, wobei die Steuerungsnetzwerkknoten einen oder mehrere erste Steuerungsnetzwerkknoten im Rotor (12) und einen oder mehrere zweite Steuerungsnetzwerkknoten in der Gondel (13) umfassen;
ein Überwachungsnetzwerk, das Überwachungsnetzwerkknoten (36, 37) umfasst, die durch ein zweites Netzwerk verbunden sind, wobei die Überwachungsnetzwerkknoten einen oder mehrere erste Überwachungsnetzwerkknoten im Rotor (36) und einen oder mehrere zweite Überwachungsnetzwerkknoten in der Gondel (37) umfassen;
eine Lichtleitfaser (8), die vom ersten und zweiten Netzwerk gemeinsam genutzt wird und sich zwischen der Gondel und dem Rotor erstreckt;
einen ersten Wellenlängenmultiplexer/-demultiplexer (50a) im Rotor; und
einen zweiten Wellenlängenmultiplexer/-demultiplexer (50b) in der Gondel, wobei:
der erste Wellenlängenmultiplexer/-demultiplexer konfiguriert ist, um gondelgebundenes Licht zu empfangen und das gondelgebundene Licht auf die Lichtleitfaser zu multiplexen;
der zweite Wellenlängenmultiplexer/-demultiplexer konfiguriert ist, um das gondelgebundene Licht aus der Lichtleitfaser zu demultiplexen; und
der zweite Wellenlängenmultiplexer/-demultiplexer konfiguriert ist, um das rotorgebundene Licht auf die Lichtleitfaser zu multiplexen;
**dadurch gekennzeichnet, dass**:
der erste Wellenlängenmultiplexer/-demultiplexer konfiguriert ist, um rotorgebundenes Licht aus der Lichtleitfaser zu demultiplexen und es basierend auf einer Wellenlänge des rotorgebundenen Lichts entweder an das Steuerungsnetzwerk oder das Überwachungsnetzwerk weiterzuleiten; und
der zweite Wellenlängenmultiplexer/-demultiplexer konfiguriert ist, um gondelgebundenes Licht basierend auf einer Wellenlänge des gondelgebundenen Lichts entweder an das Steuerungsnetzwerk oder das Überwachungsnetzwerk weiterzuleiten.

2. Windkraftanlage nach Anspruch 1, wobei mindestens einer der ersten Überwachungsnetzwerkknoten (36) und mindestens einer der zweiten Überwachungsnetzwerkknoten (37) ein Überwachungselement umfasst, das konfiguriert ist, um die Windkraftanlage zu überwachen und Überwachungsdaten zu erzeugen.

3. Windkraftanlage nach Anspruch 2, wobei das zweite Netzwerk konfiguriert ist, um die Überwachungsdaten zu empfangen und die Überwachungsdaten an eine von der Windkraftanlage entfernte Unterstation (33) zu kommunizieren.

4. Windkraftanlage nach einem vorstehenden Anspruch, wobei das zweite Netzwerk konfiguriert ist, um Überwachungsnetzwerkdaten an die Überwachungsnetzwerkknoten (36, 37) zu kommunizieren.

5. Windkraftanlage nach Anspruch 4, wobei die Überwachungsnetzwerkdaten Konfigurationsdaten oder Befehlsdaten umfassen.

6. Windkraftanlage nach einem vorstehenden Anspruch, wobei mindestens einer der ersten Steuerungsnetzwerkknoten (12) und mindestens einer der zweiten Steuerungsnetzwerkknoten (13) ein Steuerungselement umfasst, das konfiguriert ist, um die Windkraftanlage basierend auf Steuerungsdaten zu steuern, und das erste Lichtleitfasernetzwerk konfiguriert ist, um die Steuerungsdaten an die Steuerungselemente zu kommunizieren.

7. Windkraftanlage nach einem vorstehenden Anspruch, wobei der erste Wellenlängenmultiplexer/-demultiplexer (50a) und/oder der zweite Wellenlängenmultiplexer/-demultiplexer (50b) konfiguriert sind, um passiv betrieben zu werden.

8. Windkraftanlage nach einem vorstehenden Anspruch, wobei die Lichtleitfaser eine Multimode-Lichtleitfaser ist.

9. Windkraftanlage nach einem vorstehenden Anspruch, wobei sich der erste Wellenlängenmultiplexer/-demultiplexer (50a) in der Nabe (4) befindet.

10. Windkraftanlage nach einem vorstehenden Anspruch, wobei das Steuerungsnetzwerk und das Überwachungsnetzwerk jeweils einen jeweiligen Sender (62a, 63a) im Rotor umfassen und die Sender im Rotor konfiguriert sind, um das gondelgebundene Licht bei jeweiligen Wellenlängen zu erzeugen und es dem ersten Wellenlängenmultiplexer/-demultiplexer (50a) zuzuführen.

11. Windkraftanlage nach einem vorstehenden Anspruch, wobei das Steuerungsnetzwerk und das Überwachungsnetzwerk jeweils einen jeweiligen Sender in der Gondel (62b, 63b) umfassen und die Sender in der Gondel konfiguriert sind, um das rotorgebundene Licht bei jeweiligen Wellenlängen zu erzeugen und es dem zweiten Wellenlängenmultiplexer/-demultiplexer (50b) zuzuführen.

12. Windkraftanlage nach einem vorstehenden Anspruch, wobei das Steuerungsnetzwerk und das Überwachungsnetzwerk jeweils einen jeweiligen Empfänger (64a, 65b) im Rotor umfassen und die Empfänger im Rotor jeweils konfiguriert sind, um das rotorgebundene Licht bei entsprechenden Wellenlängen von dem ersten Wellenlängenmultiplexer/-demultiplexer (50a) zu empfangen und das rotorgebundene Licht in ein elektrisches Signal umzuwandeln.

13. Windkraftanlage nach einem vorstehenden Anspruch, wobei das Steuerungsnetzwerk und das Überwachungsnetzwerk jeweils einen jeweiligen Empfänger (64b, 65b) in der Gondel umfassen und die Empfänger in der Gondel jeweils konfiguriert sind, um das gondelgebundene Licht bei entsprechenden Wellenlängen von dem zweiten Wellenlängenmultiplexer/-demultiplexer (50b) zu empfangen und das gondelgebundene Licht in ein elektrisches Signal umzuwandeln.

14. Verfahren zum Handhaben von Kommunikationssignalen in Netzwerken einer Windkraftanlage (1), wobei die Windkraftanlage umfasst: eine Gondel (3); einen drehbar an der Gondel montierten Rotor (4, 5), wobei der Rotor eine Nabe (4) und sich von der Nabe erstreckende Blätter (5) umfasst; ein Steuerungsnetzwerk, das Steuerungsnetzwerkknoten (12, 13) umfasst, die durch ein erstes Netzwerk verbunden sind, wobei die Steuerungsnetzwerkknoten einen oder mehrere erste Steuerungsnetzwerkknoten im Rotor (12) und einen oder mehrere zweite Steuerungsnetzwerkknoten in der Gondel (13) umfassen; ein Überwachungsnetzwerk, das Überwachungsnetzwerkknoten (36, 37) umfasst, die durch ein zweites Netzwerk verbunden sind, wobei die Überwachungsnetzwerkknoten einen oder mehrere erste Überwachungsnetzwerkknoten im Rotor (36) und einen oder mehrere zweite Überwachungsnetzwerkknoten in der Gondel (37) umfassen; und eine Lichtleitfaser (8), die vom ersten und zweiten Netzwerk gemeinsam genutzt wird und sich zwischen der Gondel und dem Rotor erstreckt, wobei das Verfahren umfasst: Empfangen von gondelgebundenem Licht und Multiplexen des gondelgebundenen Lichts auf die Lichtleitfaser; Demultiplexen des gondelgebundenen Lichts von der Lichtleitfaser; und Multiplexen des rotorgebundenen Lichts auf die Lichtleitfaser; **dadurch gekennzeichnet, dass** das Verfahren weiter umfasst: Demultiplexen von rotorgebundenem Licht von der Lichtleitfaser und Weiterleiten desselben entweder an das Steuerungsnetzwerk oder an das Überwachungsnetzwerk basierend auf einer Wellenlänge des gondelgebundenen Lichts; und Weiterleiten von gondelgebundenem Licht entweder an das Steuerungsnetzwerk oder an das Überwachungsnetzwerk basierend auf einer Wellenlänge des gondelgebundenen Lichts.

## Revendications

1. Éolienne (1) comprenant :
une nacelle (3) ;
un rotor (4, 5) monté rotatif sur la nacelle, le rotor comprenant un moyeu (4) et des pales (5) s'étendant à partir du moyeu ;
un réseau de commande comprenant des nœuds de réseau de commande (12, 13) raccordés par un premier réseau, les nœuds de réseau de commande comprenant un ou plusieurs premiers nœuds de réseau de commande dans le rotor (12) et un ou plusieurs seconds nœuds de réseau de commande dans la nacelle (13) ;
un réseau de surveillance comprenant des nœuds de réseau de surveillance (36, 37) raccordés par un second réseau, les nœuds de réseau de surveillance comprenant un ou plusieurs premiers nœuds de réseau de surveillance dans le rotor (36) et un ou plusieurs seconds nœuds de réseau de surveillance dans la nacelle (37) ;
une fibre optique (8) qui est partagée par les premier et second réseaux et s'étend entre la nacelle et le rotor ;
un premier multiplexeur/démultiplexeur à division de longueur d'onde (50a) dans le rotor ; et
un second multiplexeur/démultiplexeur à division de longueur d'onde (50b) dans la nacelle, dans laquelle :
le premier multiplexeur/démultiplexeur à division de longueur d'onde est configuré pour recevoir la lumière liée à la nacelle et multiplexer la lumière liée à la nacelle sur la fibre optique ;
le second multiplexeur/démultiplexeur à division de longueur d'onde est configuré pour démultiplexer la lumière liée à la nacelle sur la fibre optique ;
le second multiplexeur/démultiplexeur à division de longueur d'onde est configuré pour multiplexer la lumière liée au rotor sur la fibre optique ;
**caractérisée en ce que** :
le premier multiplexeur/démultiplexeur à division de longueur d'onde est configuré pour démultiplexer la lumière liée au rotor de la fibre optique et l'acheminer soit vers le réseau de commande, soit le réseau de surveillance sur la base d'une longueur d'onde de la lumière liée au rotor ; et
le second multiplexeur/démultiplexeur à division de longueur d'onde est configuré pour acheminer la lumière liée à la nacelle soit vers le réseau de commande, soit vers le réseau de surveillance sur la base d'une longueur d'onde de la lumière liée à la nacelle.

2. Éolienne selon la revendication 1, dans laquelle au moins un des premiers nœuds de réseau de surveillance (36) et au moins un des seconds nœuds de réseau de surveillance (37) comprennent un élément de surveillance configuré pour surveiller l'éolienne et générer des données de surveillance.

3. Éolienne selon la revendication 2, dans laquelle le second réseau est configuré pour recevoir les données de surveillance et communiquer les données de surveillance à une sous-station (33) distante de l'éolienne.

4. Éolienne selon une quelconque revendication précédente, dans laquelle le second réseau est configuré pour communiquer des données de réseau de surveillance aux nœuds de réseau de surveillance (36, 37).

5. Éolienne selon la revendication 4, dans laquelle les données du réseau de surveillance comprennent des données de configuration ou des données de commande.

6. Éolienne selon une quelconque revendication précédente, dans laquelle au moins un des premiers nœuds de réseau de commande (12) et au moins un des seconds nœuds de réseau de commande (13) comprennent un élément de commande configuré pour commander l'éolienne sur la base de données de commande, et le premier réseau de fibres optiques est configuré pour communiquer les données de commande aux éléments de commande.

7. Éolienne selon une quelconque revendication précédente, dans laquelle le premier multiplexeur/démultiplexeur à division de longueur d'onde (50a) et/ou le second multiplexeur/démultiplexeur à division de longueur d'onde (50b) sont configurés pour fonctionner de manière passive.

8. Éolienne selon une quelconque revendication précédente, dans laquelle la fibre optique est une fibre optique multimode.

9. Éolienne selon une quelconque revendication précédente, dans laquelle le premier multiplexeur/démultiplexeur à division de longueur d'onde (50a) se trouve dans le moyeu (4).

10. Éolienne selon une quelconque revendication précédente, dans laquelle le réseau de commande et le réseau de surveillance comprennent chacun un émetteur respectif (62a, 63a) dans le rotor et les émetteurs dans le rotor sont configurés pour produire la lumière liée à la nacelle à des longueurs d'onde respectives et l'introduire dans le premier multiplexeur/démultiplexeur à division de longueur d'onde (50a).

11. Éolienne selon une quelconque revendication précédente, dans laquelle le réseau de commande et le réseau de surveillance comprennent chacun un émetteur respectif dans la nacelle (62b, 63b) et les émetteurs dans la nacelle sont configurés pour produire la lumière liée au rotor à des longueurs d'onde respectives et l'introduire dans le second multiplexeur/démultiplexeur à division de longueur d'onde (50b).

12. Éolienne selon une quelconque revendication précédente, dans laquelle le réseau de commande et le réseau de surveillance comprennent chacun un récepteur respectif (64a, 65b) dans le rotor et les récepteurs dans le rotor sont chacun configurés pour recevoir la lumière liée au rotor à des longueurs d'onde respectives en provenance du premier multiplexeur/démultiplexeur à division de longueur d'onde (50a) et convertir la lumière liée au rotor en un signal électrique.

13. Éolienne selon une quelconque revendication précédente, dans laquelle le réseau de commande et le réseau de surveillance comprennent chacun un récepteur respectif (64b, 65b) dans la nacelle et les récepteurs dans la nacelle sont chacun configurés pour recevoir la lumière liée à la nacelle à des longueurs d'onde respectives en provenance du second multiplexeur/démultiplexeur à division de longueur d'onde (50b) et convertir la lumière liée à la nacelle en un signal électrique.

14. Procédé de gestion de signaux de communication dans des réseaux d'une éolienne (1), l'éolienne comprenant : une nacelle (3) ; un rotor (4, 5) monté rotatif sur la nacelle, le rotor comprenant un moyeu (4) et des pales (5) s'étendant à partir du moyeu ; un réseau de commande comprenant des nœuds de réseau de commande (12, 13) raccordés par un premier réseau, les nœuds de réseau de commande comprenant un ou plusieurs premiers nœuds de réseau de commande dans le rotor (12) et un ou plusieurs seconds nœuds de réseau de commande dans la nacelle (13) ; un réseau de surveillance comprenant des nœuds de réseau de surveillance (36, 37) raccordés par un second réseau, les nœuds de réseau de surveillance comprenant un ou plusieurs premiers nœuds de réseau de surveillance dans le rotor (36) et un ou plusieurs seconds nœuds de réseau de surveillance dans la nacelle (37) ; et une fibre optique (8) qui est partagée par les premier et second réseaux et s'étend entre la nacelle et le rotor, le procédé comprenant : la réception de la lumière liée à la nacelle et le multiplexage de la lumière liée à la nacelle sur la fibre optique ; le démultiplexage de la lumière liée à la nacelle provenant de la fibre optique ; et le multiplexage de la lumière liée au rotor sur la fibre optique ; **caractérisé en ce que** le procédé comprend en outre : le démultiplexage de la lumière liée au rotor provenant de la fibre optique et son acheminement soit vers le réseau de commande, soit vers le réseau de surveillance sur la base d'une longueur d'onde de la lumière liée au rotor ; et l'acheminement de la lumière liée à la nacelle soit vers le réseau de commande, soit vers le réseau de surveillance sur la base d'une longueur d'onde de la lumière liée à la nacelle.
